# EUROPEAN PATENT SPECIFICATION

(11) **EP 1 878 854 B1**
(45) Date of publication and mention of the grant of the patent: **30.08.2017**
(21) Application number: 07397024.6
(22) Date of filing: 11.07.2007
(51) Int. Cl.: E04G 21/14, B28B 23/00, B28B 11/00

(54) **Method for attaching a lifting lug to a concrete product**
Verfahren zur Befestigung einer Kranöse an einem Betonprodukt
Procédé pour fixer un crochet de levage dans un produit en béton

(30) Priority: 12.07.2006 FI 20060678
(43) Date of publication of application: 16.01.2008
(73) Proprietor: Elematic Oyj, 37801 Akaa (FI)
(72) Inventor: Järvinen, Lassi, FI-37600, Valkeakoski (FI); Seppänen, Aimo, FI-37700, Sääksmäki (FI)
(74) Representative: Berggren Oy, Helsinki & Oulu

(56) References cited:
- EP-A- 1 555 100
- WO-A2-2008/025894
- BE-A6- 1 016 424
- DE-A1- 3 219 139
- DK-A- 153 091
- FR-A- 2 885 548
- FR-A1- 2 833 285
- GB-A- 291 838

## Description

The present invention concerns attaching of lifting lugs to a product cast of concrete and provided with prestressed reinforcing strands to a hollow-core slab. For lifting and moving of hollow-core slabs and massive slabs it is often necessary to provide the ready cast slabs with lifting lugs. Traditionally the lugs are mounted manually in the concrete slab factory when manufacturing the slab.

In one method known in the art for attaching lifting lugs, the lifting lugs are positioned to the cast hollow-core slab at the hollow cores, whereby the upper surface of the slab is removed at a predetermined place and predetermined length at the hollow core of the hollow-core slab, the opened ends of the hollow core are plugged e.g. by means of plugs made of plastic or by means of added concrete mass, and the lifting lug is positioned to the provided space. After that, the space of the hollow-core slabs defined by the plugs is refilled with concrete mass up to the level of the upper surface of the hollow-core slab. In this kind of a solution the lifting lug comprises a cup-like portion having its upper edges limited to the level of the upper surface of the hollow-core slab, and the lug portion of the lifting lug sets itself substantially in the middle of the cup, so that the uppermost part thereof is located substantially at the level of the upper surface of the cast hollow-core slab.

In another solution known in the art, the lifting lug is formed of a wire cable lug that is located into an opening formed to the hollow-core slab aligned with the hollow core, as described above. A steel bar is mounted inside the hollow-core slab to the lower edge of the wire cable lug, said steel bar extending through the lug and being perpendicular to the lug. After that the opening of the hollow-core slab is filled with concrete up to the level of the upper surface of the slab, whereby the upper part of the wire cable lug stays above the upper surface of the hollow-core slab forming thus a lifting lug for lifting the hollow-core slab.

It is also known in the art to use lifting lugs bent of reinforcement steel, to be cast to an opened and plugged hollow core so that the lug portion of the lifting lug remains above the upper surface of the slab.

One problem with the solutions known in the art described above is that especially when lifting heavy hollow-core slabs, the upper surface of the slab can be broken at the lifting lugs, and the lifting lugs can be loosened from the hollow-core slab during the lifting. Additionally, a lot of manual work is required by the methods known in the art for mounting the lifting lugs, which extends the manufacturing time of the hollow-core slabs.

In publication WO 2008/025894 is disclosed a solution where a part forming a lifting lug is inserted in a hollow-core concrete slab so that it is turned to place the lower ends of the part forming the lifting lug under a reinforcing strand of the concrete slab. This publication is prior art under Article 54(3) EPC. According to the present invention, a part forming the lifting lug is attached to the fresh, i.a. the freshly cast hollow-core slab provided with reinforcing strands, so that the part forming the lifting lug is embedded by vibrating through the upper surface of the slab inside the slab so that when the upper edge of the part forming the lifting lug is at the level of the upper surface of the slab or below that, the part forming the lifting lug is turned simultaneously with the vibrating so that the lower ends of the part forming the lifting lug set themselves under the reinforcing strands. In that way the attached lifting lug can be supported to the reinforcing strands of the cast slab, which significantly strengthens the attachment of the lifting lug to the slab.

More precisely, the method in accordance with the invention is stated in claim 1.

By means of the solution according to the present invention it can be secured, that the lifting lug will stay in place even when lifting heavy hollow-core slabs, and the damages to the hollow-core slab caused by loosening of the lifting lug can be prevented.

The invention will be described in more detail by means of example in the following, with reference to the enclosed drawings, wherein
Figure 1 is a schematic view of one apparatus which is not part of the invention, for breaking the surface of the hollow-core slab at the hollow core, and for closing the ends of the hollow cores defined by the formed opening,
Figures 2A-2P show schematically the operation of the apparatus shown in Figure 1, in a method which is not part of the invention,
Figures 3A-3C show schematically the phases of attaching the lifting lug to the opening formed to the hollow-core in the method which is not part of the invention,
Figure 4 shows schematically how the part forming a lifting lug is supported to the reinforcing strands of the hollow-core slab,
Figure 5 shows one part forming a lifting lug,
Figure 6 shows one ready hollow-core slab equipped with the lifting lugs.

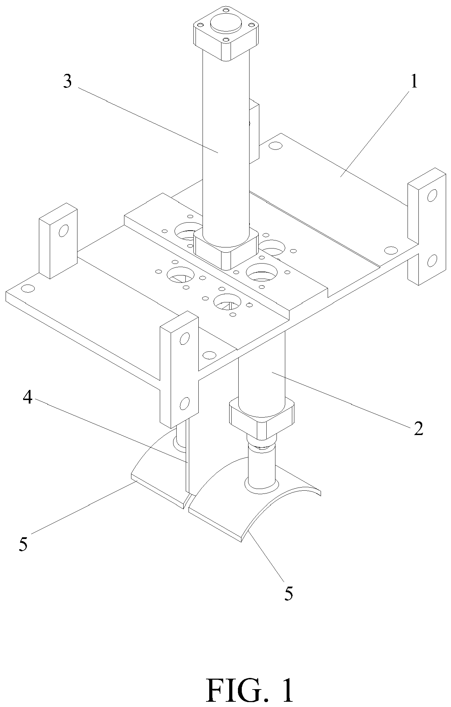

Figure 1 shows an apparatus for breaking the surface of the hollow-core slab at the hollow core and for closing the hollow cores defined by the formed opening. The apparatus comprises a frame 1, two pressing cylinders 2 driving the pressing means 5 of the apparatus and a pressing cylinder 3 of a support plate driving the support plate 4.

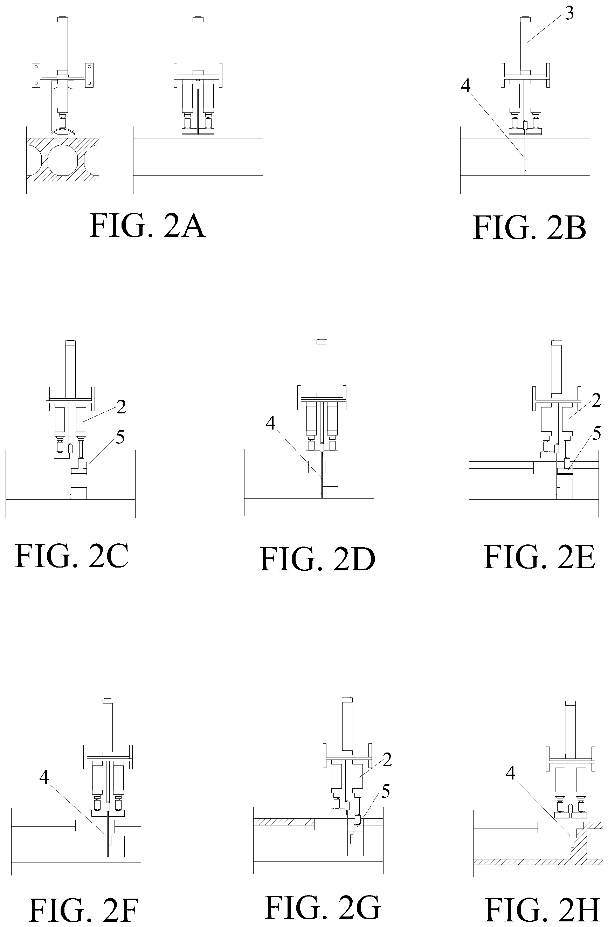

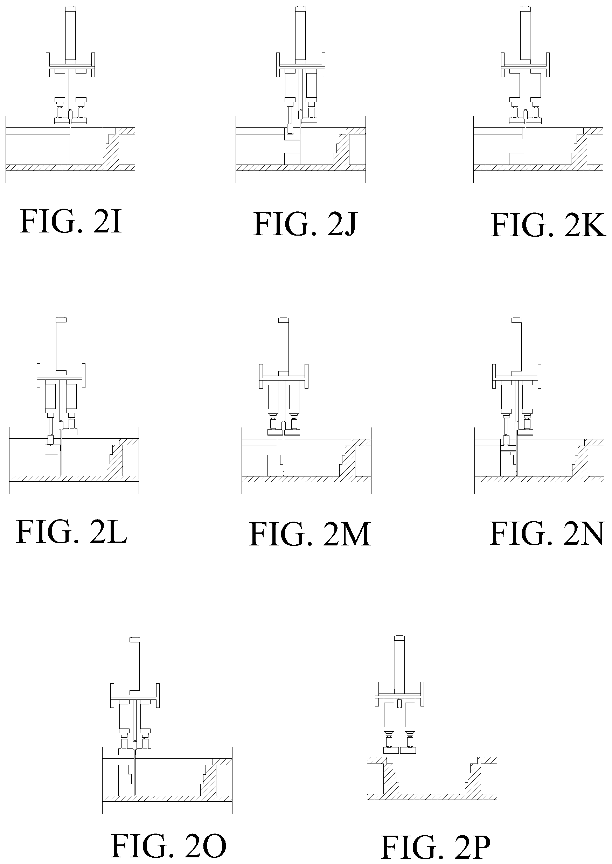

The operation of the apparatus of Figure 1 is described in the following with reference to Figures 2A-2P. First, the apparatus is placed as shown in Figure 2A above the upper surface of the hollow-core slab and in the middle of the cavity to be formed, in a longitudinal direction of the hollow-core slab.

After the apparatus has been positioned, the upper surface of the fresh hollow-core slab is broken by pushing the support plate 4 by means of the pressing cylinder 3 of the support plate as shown in Figure 2B through the upper surface of the hollow-core slab and to the space formed by the hollow core so that the side and lower surfaces of the support plate set themselves substantially to the level of the side and lower surfaces of the hollow core, and the support plate is left in this position.

Next, as shown in Figure 2C, the pressing means 5 is pressed by means of the pressing cylinder 2 through the upper surface of the fresh hollow-core slab, whereby the pressing means breaks a piece of fresh concrete mass having the same width as the pressing means, from the upper surface of the hollow-core slab and drops it to the lower surface of the hollow core of the hollow-core slab.

Then, as shown in Figure 2D, the apparatus is moved laterally in the longitudinal direction of the hollow core of the hollow-core slab to the direction of the broken upper surface of the hollow-core slab, whereby the support plate 4 moves concrete mass dropped to the bottom of the hollow core under the upper surface of the hollow-core slab. As shown in Figure 2D, the broken concrete mass is preferably not totally moved below the unbroken upper surface of the hollow-core slab, but the support plate 4 is left to a small distance of the edge thereof.

Next, as shown in Figure 2E, the breaking of the upper surface of the hollow-core slab is repeated by means of the pressing means 5 and the pressing cylinder 2, whereby the fresh concrete mass broken from the upper surface of the hollow-core slab drops almost totally on top of the concrete mass earlier broken from the upper surface of the hollow-core slab, thus growing the heap of concrete mass on the bottom of the hollow core.

After that, as shown in Figure 2F, the broken concrete mass lying on the bottom of the hollow core is again moved under the unbroken upper surface of the hollow-core slab by means of the support plate 4, and a new part of the upper surface of the hollow-core slab is broken as shown in Figure 2G on top of the concrete mass on the bottom of the hollow-core slab by means of the pressing means 5 and the pressing cylinder 2.

Now, the amount to plug the hollow core has been reached in form of a heap in the hollow core, and the final plugging or closing of the hollow core happens as shown in Figure 2H, by moving by means of the support plate 4 the broken concrete mass at least partly under the unbroken upper surface of the hollow-core slab.

When the first end of the hollow core defined by the opening formed to the upper surface of the hollow-core slab has been plugged, the apparatus is moved in the longitudinal direction of the hollow core to touch the opposite edge of the opening. Then, the hollow core is plugged in the corresponding way as described above by means of the identical breaking means of the upper surface of the hollow-core slab, as shown in Figures 2I-2P.

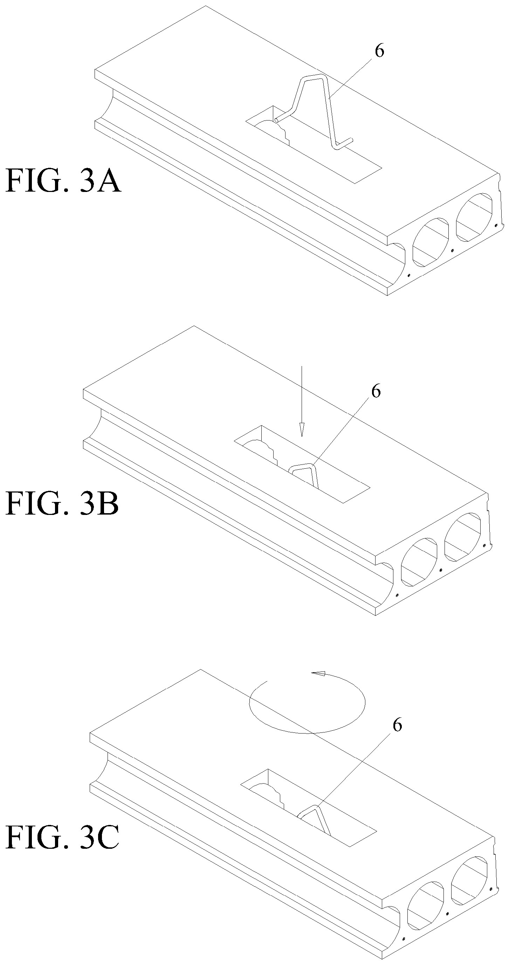

As described above, an opening has now been formed to the hollow-core slab, the hollow cores defined by the opening being closed. In the following, the attaching of the lifting lug will be described with reference to Figures 3A-3C showing the mounting phases of the lifting lug.

As shown in Figure 3A, the lifting lug or the part 6 forming the lifting lug is first brought above the opening formed into the hollow-core slab, and then lowered to the opening aligned, as shown in Figure 3B. Finally, the lifting lug 6 is turned as shown in Figure 3C to its final position, whereby the end parts of the part forming the lifting lug are pushed inside the necks of the cast hollow-core slab, and there under the reinforcing strands.

For closing the formed opening, it is filled with fresh concrete mass, which is compacted by vibrating. The filling of the opening can be performed before mounting of the part 6 forming the lifting lug, during the mounting or after the mounting thereof. Preferably, the filling of the opening is performed at the same time as the positioning of the part forming the lifting lug, and the concrete mass forming the filling is vibrated at the same time, whereby the vibratory effect of the vibrating plasticizes the concrete mass of the hollow-core slab thus facilitating the penetration of the end parts of the part 6 forming the lifting lug into the hollow-core slab, and the concrete mass to be used as filling can penetrate the fractures and holes eventually formed in the hollow-core slab in connection with the mounting of the lifting lug.

The lifting lug 6 is mounted in the hollow-core slab preferably so that the uppermost surface of the lifting lug remains on the level of the upper surface of the hollow-core slab or below it, whereby a cavity is formed for the lifting lug in the cast filling concrete at the lug. In this way the use of filler concrete needed at the installation phase of the hollow-core slab at the building site can be minimized.

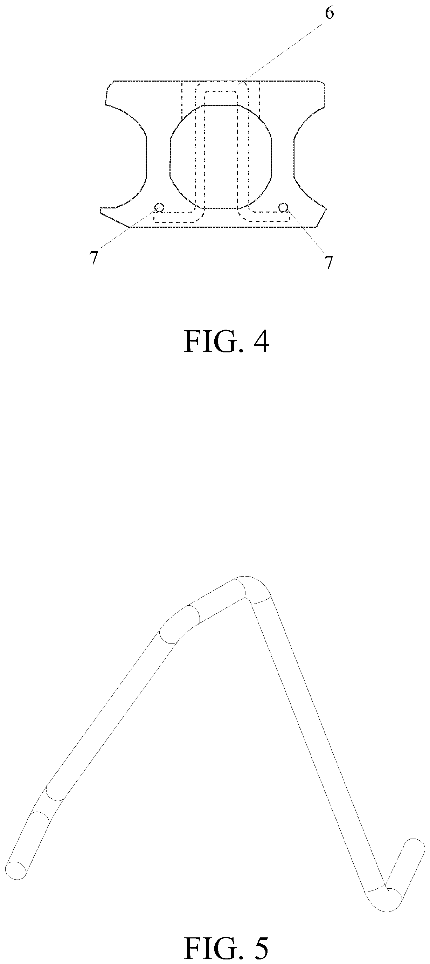

Figure 4 shows the supporting of one part 6 forming the lifting lug to the reinforcing strands 7 of the hollow-core slab, when the part 6 forming the lifting lug has been positioned in place in the opening formed in the hollow-core slab.

Figure 5 shows an example of a part forming the lifting lug said part corresponding to the part 6 shown in Figures 3A-3B and 4.

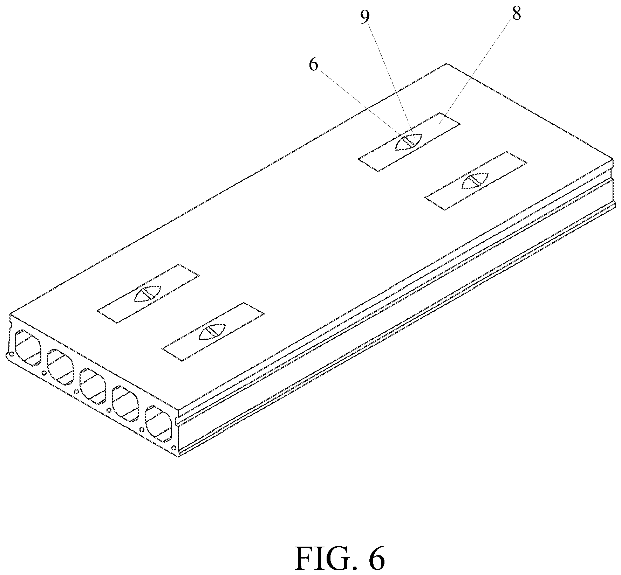

Figure 6 shows a ready-made hollow-core slab equipped with lifting lugs. After the parts 6 forming the lifting lug have been positioned in place, during it or before the positioning, the openings have been filled with filling concrete 8 that has been compacted during the positioning of the lifting lug or after that by vibrating. In connection with the compacting of the filling concrete 8, a cavity 9 has been formed in the filling concrete, through which the lifting lug can be used, said cavity being preferably located having its upper surface at the level of the upper surface of the hollow-core slab or slightly below it. According to the method of the invention, attaching of the part forming the lifting lug to the fresh hollow-core slab equipped with the reinforcing strands can also be implemented in the most simple way so that the part forming the lifting lug is embedded by vibrating through the upper surface of the slab into the slab so that when the part forming the lifting lug has its upper edge substantially at the upper level of the slab, the part forming the lifting lug is turned simultaneously with the vibrating, so that the lower ends of the lifting lug set themselves under the reinforcing strands of the slab.

In addition, this kind of a solution can be advantageously implemented with massive slabs, that means slabs having a solid cross section. In addition, in this embodiment which is not part of the invention, the cavity or space to be formed to the upper surface of the slab around the lifting lug, essential for the use of the lifting lug, can be advantageously formed by the formation of the tool or device to be used for embedding or with a part to be separately attached thereto, that forms said space in connection with the embedding by vibration or at the final phase thereof. Preferably the forming of this space happens when the part forming the lifting lug is turned.

With this embodiment which is not part of the invention, it is possible to position the lifting lug relatively freely over the total width of the cast slab.

By means of this method, it is possible to significantly emphasize the attachment of the lifting lug to the cast slab, whereby the probability that the lifting lug will be eventually torn off is significantly decreased, and correspondingly, eventual dangerous situations caused by tearing off when lifting the slabs can be avoided.

## Claims

1. A method for attaching a part forming a lifting lug to fresh, prestressed hollow-core slab, in which method the part forming the lifting lug is embedded by vibrating at least partly through the upper surface of the slab, wherein after embedding the part forming the lifting lug is turned simultaneously with the vibrating, so that the lower parts of the lifting lug set themselves under the reinforcing strands of the slab.

## Patentansprüche

1. Verfahren zum Befestigen eines eine Hebeöse bildenden Teils an einer frischen, vorgespannten Hohlkernplatte, wobei bei dem Verfahren der die Hebeöse bildende Teil zumindest teilweise durch die Oberseite der Platte schwingend eingebettet ist, wobei der die Hebeöse bildende Teil nach dem Einbetten gleichzeitig mit dem Vibrieren gedreht wird, so dass sich die unteren Teile der Hebeöse von selbst unter den Verstärkungssträngen der Platte anordnen.

## Revendications

1. Procédé d'attachement d'une partie formant une oreille de levage à une plaque à âme creuse précontrainte, fraiche, dans lequel procédé, la partie formant une oreille de levage est intégrée par vibration au moins partiellement dans la surface supérieure de la plaque, dans lequel après l'intégration la partie formant une oreille de levage pivote simultanément avec la vibration, de sorte que les parties inférieures de l'oreille de levage se positionnent d'elles-mêmes sous les fils de renforcement de la plaque.
